(19) 

Europäisches
Patentamt
European
Patent Office
Office européen
des brevets

(11) **EP 4 375 844 A1**

(12) **EUROPEAN PATENT APPLICATION**
published in accordance with Art. 153(4) EPC

(43) Date of publication:
**29.05.2024 Bulletin 2024/22**

(21) Application number: **23790535.1**

(22) Date of filing: **31.07.2023**

(51) International Patent Classification (IPC):
**G06F 15/173** *(2006.01)*    **G06N 3/04** *(2023.01)*

(86) International application number:
**PCT/CN2023/110115**

(87) International publication number:
**WO 2024/051388 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.09.2022 CN 202211098597**

(71) Applicant: **Zhejiang Lab
Hangzhou, Zheijiang 311121 (CN)**

(72) Inventors:
• **HE, Yukun
Zhejiang 311121 (CN)**
• **MA, De
Zhejiang 311121 (CN)**
• **LI, Ying
Hangzhou
Zhejiang 310058 (CN)**
• **SUN, Shichun
Zhejiang 311121 (CN)**

• **ZHANG, Ming
Zhejiang 311121 (CN)**
• **JIN, Xiaofei
Zhejiang 311121 (CN)**
• **ZHU, Guoquan
Zhejiang 311121 (CN)**
• **YANG, Fangchao
Zhejiang 311121 (CN)**
• **LV, Pan
Hangzhou
Zhejiang 310058 (CN)**
• **DENG, Shuiguang
Hangzhou
Zhejiang 310058 (CN)**
• **PAN, Gang
Hangzhou
Zhejiang 310058 (CN)**

(74) Representative: **Viering, Jentschura & Partner
mbB
Patent- und Rechtsanwälte
Am Brauhaus 8
01099 Dresden (DE)**

(54) **NEURAL NETWORK ON-CHIP MAPPING METHOD AND DEVICE BASED ON TABU SEARCH ALGORITHM**

(57)    A neural network on-chip mapping method and apparatus based on a tabu search algorithm are provided. The method includes: constructing a tabu search table and using a heuristic-based iterative search process to select local computing cores of a network-on-chip as candidates, establishing an integer programming model and solving an optimal solution, continuously reducing an objective cost function of a mapping solution by loop iteration, and finally obtaining an approximately optimal deployment scheme.

step 1: acquiring a topological structure and parameter information of a spiking neural network to be deployed and constraint information of computing cores of a target machine network-on-chip

↓

step 2: converting the spiking neural network into a directed acyclic graph (DAG), and determining neuron sequences to be assigned according to topological sorting in the DAG

↓

step 3: from a pre-specified initial computing core in the network-on-chip, sequentially assigning the neuron sequences in clusters, and mapping and placing, by using a nearest neighbor algorithm, the neuron sequences one by one on the computing cores of the network-on-chip to construct an initial solution of mapping

↓

step 4: defining and initializing a tabu search table and a timer, calculating cost functions of all computing cores, and selecting candidate computing cores according to the cost functions, to construct a candidate set

↓

step 5: establishing an integer programming model for a selected and constructed candidate set and calculating an optimal solution, and swapping a core position of each neuron group according to the optimal solution, to complete local search optimization

↓

step 6: iterating the timer, checking and updating the tabu search table, iteratively repeating step 4 to step 6 until an upper limit of iteration is reached, and finally outputting mapping results from the neuron groups to the computing cores, to complete the mapping

FIG. 1

**Description**

**CROSS-REFERENCE TO RELATED APPLICATIONS**

This application claims priority to Chinese patent applications No. 202211098597.9, filed on September 9, 2022, titled "NEURAL NETWORK ON-CHIP MAPPING METHOD AND APPARATUS BASED ON TABU SEARCH ALGORITHM". The content of the above application is hereby incorporated by reference.

**TECHNICAL FIELD**

The present invention generally relates to a field of computer high-performance computing, and in particular, to a neural network on-chip mapping method and apparatus based on a tabu search algorithm.

**BACKGROUND**

A model structure of a spiking neural network is complex, millions of neurons are interconnected through synapses, and information is transmitted by spike firing. Spikes may be abstractly understood as being similar to data packets for network communication. Due to differences in behaviors of different neurons and different types of model-supported tasks, frequencies of spike sending and receiving between neurons also vary greatly. Some neurons and connected synapses store more task-solving information and fire spikes more frequently, thereby incurring a greater communication cost.

As a chip scale continues to increase, a size of an array of homogeneous computing cores that support complex computing is also gradually expanding. A large-scale computing core array supporting the spiking neural network uses a built-in routing algorithm of a network-on-chip to communicate information between cores. A communication cost is directly related to a distance between related cores. Therefore, when computing tasks of different cores are assigned, computing tasks with intensive communication with each other are considered to be more relevant, and the computing tasks are more likely to be assigned to the cores at closer distances.

Intel Corporation has designed an LCompiler to solve a problem of distribution mapping for the spiking neural network and a Loihi multi-core acceleration chip independently developed by the Intel Corporation. A Loihi architecture includes multiple cores, each of which has independent computing and storage capabilities. All cores are interconnected through the network-on-chip and can send and receive data packets to each other, which achieves a function equivalent to firing spikes between neurons of the spiking neural network. The LCompiler supports mapping to computing cores of Loihi after the network is segmented and redistributed. By reducing an input mapping efficiency ratio index, a redundant bandwidth generated by the segmentation is reduced, and at the same time, a position of a mapping target core is determined according to a maximum fanout of an assigned part of the network.

However, a mapping optimization method based on a greedy algorithm does not fully consider a global connection of the neural network. The interior of a complex neural network may have a high proportion of irregular sparse connections, and different communication density between different neurons makes different contributions to a total cost function. This algorithm only considers a connection of edges, and it is difficult to combine dynamic spike sending and receiving frequencies for mapping optimization. There is a huge waste in computing efficiency and energy consumption of obtained compilation results. Therefore, there is an urgent need to design and provide an improved network-on-chip core mapping algorithm.

**SUMMARY**

According to various embodiments of the present invention, a neural network on-chip mapping method and apparatus based on a tabu search algorithm are provided.

The present invention provides a neural network on-chip mapping method based on a tabu search algorithm, including following steps:

step 1, acquiring a topological structure and parameter information of a spiking neural network to be deployed and constraint information of computing cores of a target machine network-on-chip;
step 2, converting the spiking neural network into a directed acyclic graph (DAG), and determining neuron sequences to be assigned according to topological sorting in the DAG;
step 3, from a pre-specified initial computing core in the network-on-chip, sequentially assigning the neuron sequences in clusters, and mapping and placing, by using a nearest neighbor algorithm, the neuron sequences one by one on the computing cores of the network-on-chip to construct an initial solution of mapping;
step 4, defining and initializing a tabu search table and a timer, calculating cost functions of all computing cores, and selecting candidate computing cores according to the cost functions, to construct a candidate set;

step 5, establishing an integer programming model for a selected and constructed candidate set and calculating an optimal solution, and swapping a core position of each neuron group according to the optimal solution, to complete local search optimization; and

step 6, iterating the timer, checking and updating the tabu search table, iteratively repeating step 4 to step 6 until an upper limit of iteration is reached, and finally outputting mapping results from the neuron groups to the computing cores, to complete the mapping.

In an embodiment, at step 1, the spiking neural network includes synapses and connection structures with neuron groups as nodes, each of the neuron groups includes a plurality of neurons, the topological structure is a graph data structure represented by nodes and edges or a network structure including size and shape information, and at the same time, the topological structure is configured to provide behavioral parameters of the neurons and connection parameters in synaptic connections; and

each of the computing cores is a hardware unit including a memory and a computing unit, and the acquiring the constraint information of the computing cores of the target machine network-on-chip includes: acquiring sizes of memories of the computing cores, two-dimensional spatial position coordinates on the network-on-chip, and a connection between the computing cores.

In an embodiment, step 2 specifically includes:

converting a computing graph represented by neuron groups as nodes and synaptic connections as edges, and constructing a complete DAG according to a model input node of the spiking neural network as a source, a model output node as a target, and directions of the synaptic connections as directed edges, which is called a network DAG; then determining an order of the neuron groups for the DAG by using a topological sorting method, the topological sorting method including: counting all node in-degrees in the DAG and maintaining a priority queue sorted in ascending order of the node in-degrees, popping a node in the priority queue, sequentially deleting the edges in the DAG with this node as output, updating in-degrees of the remaining nodes in the priority queue, and repeating the steps until the priority queue is empty; and

finally, marking an order in which nodes of the neuron group are popped from the priority queue as topological sorting corresponding to the nodes of the neuron group, and numbers of the topological sorting being topological numbers of all neurons in the neuron group.

In an embodiment, step 3 specifically includes:

starting assignment from the pre-specified initial computing core according to acquired two-dimensional grid information of the network-on-chip, when not specified, the computing core at an upper left corner of a two-dimensional grid in the two-dimensional grid information being used as the initial computing core; and sequentially assigning the neuron sequences in clusters to the computing nodes according to the topological numbers, counting a quantity of synaptic connections between a current neuron group and a neuron group assigned by the network-on-chip, sequentially trying to use all available unassigned computing core resources of the network-on-chip to calculate local cost functions, respectively, and selecting, by using the nearest neighbor algorithm, the computing core of the network-on-chip with a minimum cost as a target core next assigned;

prior to assignment of all neurons in one neuron group, since all neurons have a same topological number, counting node in-degrees of all the neurons, and performing assignment sequentially in descending order of the node in-degrees of the neurons until a memory of a current computing core is full or all the neurons of the neuron group are assigned; when remaining neurons are still unassigned, classifying the remaining neurons into a new neuron group and performing assignment; and after all neurons are assigned, returning a corresponding relationship between the topological numbers of the neurons and the computing cores as a constructed initial solution of mapping; and

at the same time, all the neurons in each computing core reconstituting a new neuron group, and generating a new DAG with the neuron group as a node, which is called a physical DAG.

In an embodiment, step 4 specifically includes:

step 4.1, setting that a total of $N$ neuron groups are mapped and placed in step 3 and a total of $G$ available assigned network-on-chip computing cores, $N \leq G$, and both $N$ and $G$ are positive integers;

step 4.2, initializing a one-dimensional tabu search table denoted as $T$ with a length of $N$, with initial values of 0, and initializing a tabu time window constant denoted as $\tau$ with a typical value that is an integer within an interval [5,10] and a timer denoted as $t$ with an initial value of 0; and for an $i$-th neuron group, $i \in N$, defining a tabu time denoted as $T[i]$ in the tabu search table, which indicates that when a current time $t$, i.e., a current optimization round satisfies a relationship: $t < T[i]$, the neuron group is not allowed to be selected into the candidate set, and only when the time $t$ satisfies a relationship: $t \geq T[i]$, the neuron group is selected into the candidate set, and when the $i$-th neuron group is selected into the candidate set at the time $t$, the time of the neuron group in the tabu search table is updated to $t + \tau$; and

step 4.3, calculating a cost function between the neuron groups in the physical DAG and a global cost function of the network-on-chip, and searching for the candidate set by using a selection method based on undirected graph breadth-first search algorithm or a selection method based on a global cost function and a Prim minimum spanning tree algorithm.

In an embodiment, at step 4.3, specifically, the calculating the cost function between the neuron groups in the physical DAG is calculating communication density of spike packets between two neuron groups, which further includes: randomly selecting a sampled subset from an input dataset used by a neural network and inputting the data of the sampled subset to the neural network, and counting the number of spike packets sent from a neuron group $i_n$ to a neuron group $j_n$, a count value of the number of spike packets being the corresponding communication density, and $NCM(i_n,j_n)$ representing communication density between the neuron group $i_n$ and the neuron group $j_n$;

the calculating the global cost function of the network-on-chip is calculating an overall cost of communication of spikes on the network-on-chip, which further includes: assuming that numbers of the computing cores where the neuron group $i_n$ and the neuron group $j_n$ are located are $i_g$ and $j_g$, respectively, and the overall cost being a product of a communication distance and the communication density, that is,
$C(i_n,i_g,j_n,j_g) = GCM(i_g,j_g) \times NCM(i_n,j_n)$, where $GCM(i_g,j_g)$ represents a Manhattan distance between the computing core $i_g$ and the computing core $j_g$;
the selection method based on undirected graph breadth-first search algorithm further includes: transforming the physical DAG into an undirected graph, randomly selecting a neuron group to build an initial candidate set, traversing, by using a breadth-first search algorithm, the undirected graph with the neuron group as a starting point, and sequentially adding visited neuron groups not within a tabu range to the candidate set until a required number of neuron groups is reached in the candidate set; and
the selection method based on the global cost function and the Prim minimum spanning tree algorithm further includes: transforming the physical DAG into an undirected graph, randomly selecting a neuron group to build an initial candidate set, calculating and sorting, in the undirected graph with the neuron group as an endpoint, global costs of all neuron groups connected thereto, selecting a neuron group with a maximum global cost and adding the selected neuron group to the candidate set, investigating all edges accessible to all current neuron groups in the candidate set, searching for a neuron group of which the edges are not in the candidate set, has the maximum global cost, and is not within a range of the tabu search table, adding the searched neuron group to the candidate set again, and repeating the search process until a required number of neuron groups is reached in the candidate set.

In an embodiment, the establishing the integer programming model at step 5 specifically includes:

setting that the candidate set includes $K$ neuron groups, and numbers of the computing cores where a neuron group $i_n$ and a neuron group $j_n$ are located are $i_g$ and $j_g$, respectively; setting that a variable $x_{in,ig}$ of 0-1 is an existence state of the neuron group $i_n$ on the computing core $i_g$, when $x_{in,ig}$ is 1, it indicates that the neuron group $i_n$ is mapped on the computing core $i_g$, and when $x_{in,ig}$ is 0, it indicates that the neuron group $i_n$ is not mapped on the computing core $i_g$; and establishing the integer programming model, an expression of which is: *minimize*:

$$\sum_{i_n i_g, j_n, j_g \in K} x_{i_n,i_g}\, x_{j_n,j_g}\, C\big(i_n, i_g, j_n, j_g\big) + \sum_{i_n i_g \in K, j_n, j_g \in N \backslash K} x_{i_n,i_g}\, C\big(i_n, i_g, j_n, j_g\big)$$

*subject to*:

$$\sum_{i_n \in K} x_{i_n,i_g} = 1$$

for all $i_g$ in $K$

$$\sum_{i_g \in \boldsymbol{K}} x_{i_n, i_g} = 1$$

for all $i_n$ in $\boldsymbol{K}$

$$x_{i_n, i_g} \in \{0, 1\}$$

for all $i_n$, $i_g$ in $\boldsymbol{K}$

an objective function includes two parts, $\Sigma_{inig,jn,jg \in \boldsymbol{K}} x_{in,ig} x_{jn,jg} C(i_n, i_g, j_n, j_g)$ is a total communication cost between the K neuron groups and the computing cores where the K neuron groups are located, $\Sigma_{inig \in \boldsymbol{K}, jn, jg \in \boldsymbol{N} \setminus \boldsymbol{K}} x_{in,ig} C(i_n, i_g, j_n, j_g)$ is a total communication cost between the K neuron groups and other neuron groups not in the candidate set, and positions of the computing cores to which the neuron groups not in the candidate set are mapped are all fixed, so only $x_{in,ig}$ is retained; and

a constraint condition $\Sigma_{in \in \boldsymbol{K}} x_{in,ig} = 1$ *for all $i_g$ in $\boldsymbol{K}$* requires that, for each computing core, only one neuron group is deployed thereon; and a constraint condition $\Sigma_{ig \in \boldsymbol{K}} x_{in,ig} = 1$ *for all $i_n$ in $\boldsymbol{K}$* requires that each neuron group is deployed on only one computing core.

In an embodiment, the integer programming model is a mixed integer nonlinear programming model, an optimal solution $x_{in,ig}$ is obtained by using an extended cutting plane method, and the neuron groups $i_n$, $i_g$ satisfying a relationship: $x_{in,ig} = 1$ are found to obtain swapped positions of the computer cores of all K neuron groups.

The present invention further provides a neural network on-chip mapping apparatus based on a tabu search algorithm, including one or more processors configured to implement the neural network on-chip mapping method based on a tabu search algorithm.

The present invention further provides a computer-readable storage medium, a program is stored on the computer-readable storage medium, and when the program is executed by a processor, the neural network on-chip mapping method based on a tabu search algorithm is implemented.

Details of one or more embodiments of the present invention are set forth in the following accompanying drawings and descriptions. Other features, objectives, and advantages of the present invention become obvious with reference to the specification, the accompanying drawings, and the claims.

**BRIEF DESCRIPTION OF THE DRAWINGS**

In order to more clearly illustrate the technical solutions in embodiments of the present invention or the conventional art, the accompanying drawings used in the description of the embodiments or the conventional art will be briefly introduced below. It is apparent that, the accompanying drawings in the following description are only some embodiments of the present invention, and other drawings can be obtained by those of ordinary skill in the art from the provided drawings without creative efforts.

FIG. 1 is an overall schematic flowchart of a neural network on-chip mapping method based on a tabu search algorithm according to one or more embodiments.

FIG. 2 is a framework diagram of a specific process of a neural network on-chip mapping method based on a tabu search algorithm according to one or more embodiments.

FIG. 3 shows a network-layer DAG and a corresponding physical-layer DAG of a spiking neural network according to one or more embodiments.

FIG. 4 is a schematic diagram of constructing an initial solution of mapping by using a nearest neighbor algorithm according to one or more embodiments.

FIG. 5a is a schematic diagram of states of neuron groups at different times according to one or more embodiments.

FIG. 5b is a schematic diagram of completing construction and maintenance of a tabu search table based on the neuron groups in FIG. 5a according to one or more embodiments.

FIG. 6a is a schematic diagram of definition of a two-dimensional variable grid cost matrix (GCM) in which cost function values are recorded according to one or more embodiments.

FIG. 6b is a schematic diagram of definition of a two-dimensional variable network cost matrix (NCM) in which cost function values are recorded according to one or more embodiments.

FIG. 7 is a schematic diagram of a selected candidate set and a corresponding defined matrix of variables 0-1 in an integer programming model according to one or more embodiments.

FIG. 8 is a schematic structural diagram of a neural network on-chip mapping apparatus based on a tabu search algorithm according to one or more embodiments.

In the figures, 100 represents a neural network on-chip mapping apparatus based on a tabu search algorithm, 10 represents an internal bus, 11 represents a processor, 12 represents a non-volatile memory, 13 represents a network interface, and 14 represents an internal memory.

## DETAILED DESCRIPTION OF THE EMBODIMENT

The technical solutions in embodiments of the present invention will be described clearly and completely below with reference to the accompanying drawings in the embodiments of the present invention. Apparently, the described embodiments are merely some of rather than all of the embodiments of the present invention. All other embodiments acquired by those of ordinary skill in the art without creative efforts based on the embodiments of the present invention shall fall within the protection scope of the present invention.

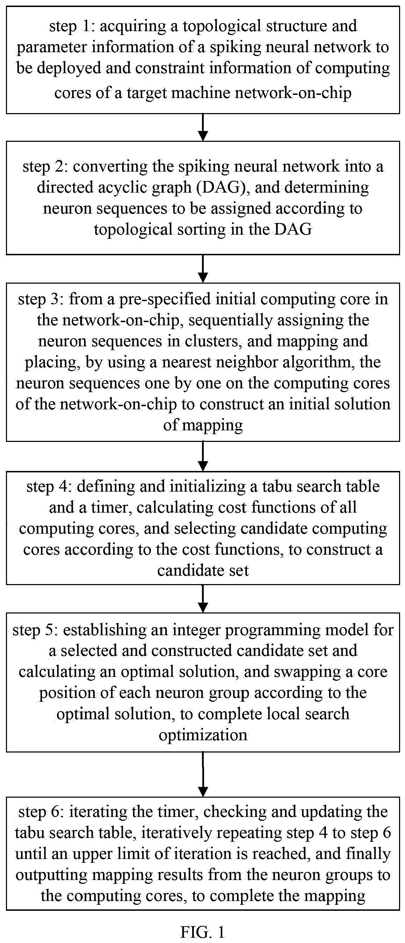

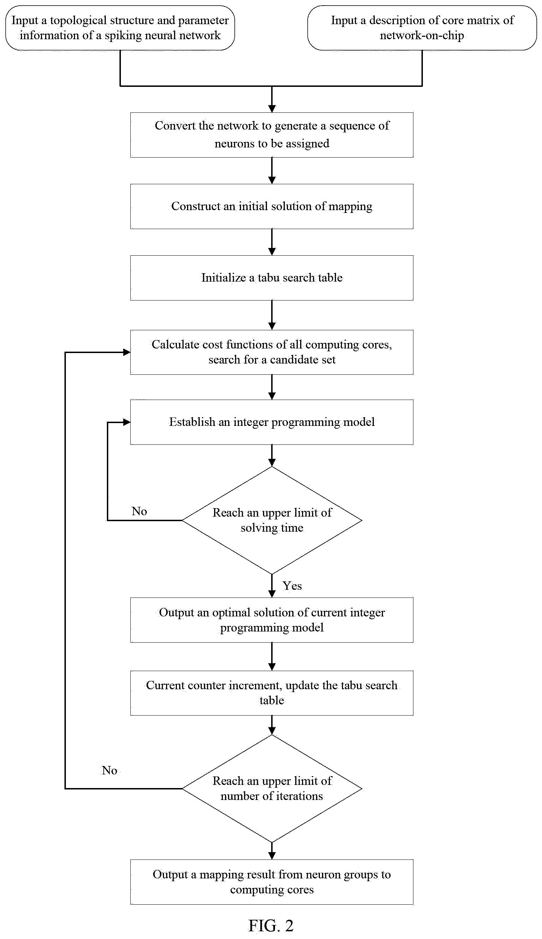

As shown in FIG. 1 and FIG. 2, a neural network on-chip mapping method based on a tabu search algorithm in the present invention includes: constructing a tabu search table and using a heuristic-based iterative search process to select local computing cores as candidates, establishing an integer programming model and solving an optimal solution, continuously reducing an objective cost function of a mapping solution by loop iteration, and finally obtaining an approximately optimal deployment scheme. The method specifically includes the step 1 to step 6.

Step 1 includes acquiring a topological structure and parameter information of a spiking neural network to be deployed and constraint information of computing cores of a target machine network-on-chip.

The spiking neural network may include synapses and connection structures with neuron groups as nodes. Specifically, the spiking neural network may include a computing graph formed by neuron groups as nodes and synaptic connections as edges. Each of the neuron groups may include a plurality of neurons, the topological structure may be a graph data structure represented by nodes and edges or a network structure including size and shape information, and at the same time, the topological structure may provide behavioral parameters of the neurons and connection parameters in synaptic connections.

The constraint information of the computing cores of the target machine network-on-chip is acquired, and each of the computing cores may be a hardware unit including a memory and a computing unit. The acquiring the constraint information of the computing cores of the target machine network-on-chip may include: acquiring sizes of the memories of the computing cores, two-dimensional spatial position coordinates on the network-on-chip, and a connection between the computing cores.

Step 2 includes converting the spiking neural network into a DAG, and determining neuron sequences to-be-assigned according to topological sorting in the DAG.

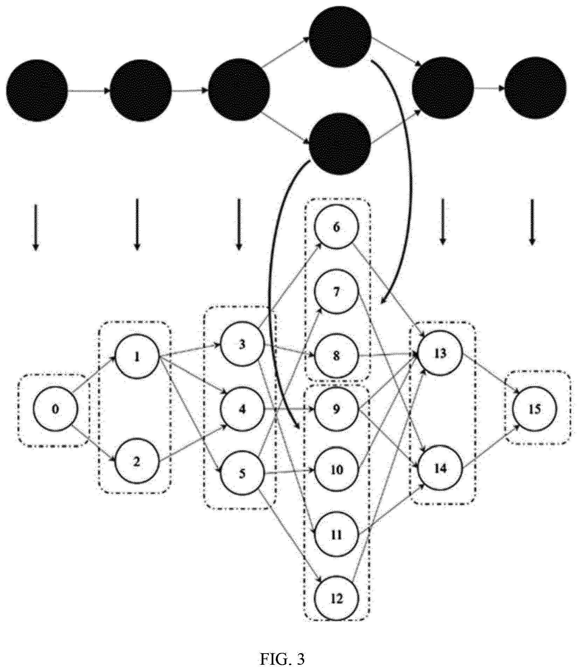

Specifically, referring to FIG. 3, a computing graph represented by neuron groups as nodes and synaptic connections as edges may be converted, and a complete DAG may be constructed according to a model input node of the spiking neural network as a source, a model output node as a target, and directions of the synaptic connections as directed edges, which is called a network DAG.

Then, an order of the neuron groups may be determined for the DAG by using a topological sorting method, and the topological sorting method may include: counting all node in-degrees in the DAG and maintaining a priority queue sorted in ascending order of the node in-degrees, popping a node in the priority queue, sequentially deleting the edges in the DAG with this node as output, updating in-degrees of the remaining nodes in the priority queue, and repeating the steps until the priority queue is empty.

Finally, an order in which nodes of the neuron group are popped from the priority queue may be marked as topological sorting corresponding to the nodes of the neuron group, and numbers of the topological sorting may be topological numbers of all neurons in the neuron group.

Step 3 includes sequentially assigning the neuron sequences in clusters from a pre-specified initial computing core in the network-on-chip, and mapping and placing, by using a nearest neighbor algorithm, the neuron sequences one by one on the computing cores of the network-on-chip to construct an initial solution of mapping.

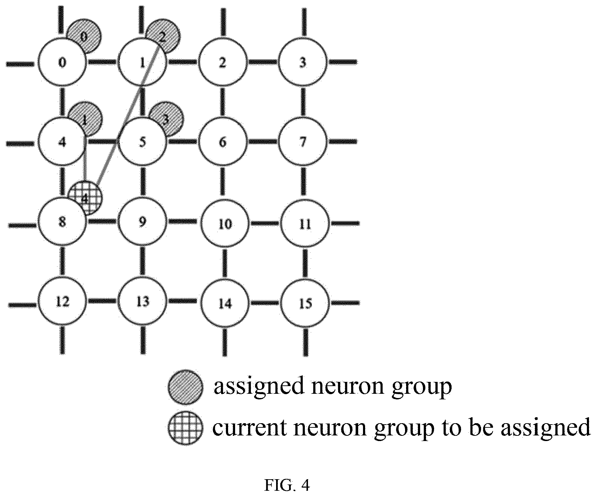

Specifically, referring to FIG. 4, assignment may be started from the pre-specified initial computing core according to acquired two-dimensional grid information of the network-on-chip. When not specified, the computing core at an upper left corner of a two-dimensional grid in the two-dimensional grid information may be used as the initial computing core.

The neuron sequences may be sequentially assigned in clusters to the computing nodes according to the topological numbers, a quantity of synaptic connections between a current neuron group and a neuron group assigned by the network-on-chip may be counted, all available unassigned computing core resources of the network-on-chip may be sequentially tried to calculate local cost functions respectively, and the computing core of the network-on-chip with a minimum cost may be selected, by using the nearest neighbor algorithm, as a target core next assigned.

Prior to assignment of all neurons in one neuron group, since all neurons have a same topological number, node in-degrees of all the neurons may be required to be counted, and assignment is performed sequentially in descending order of the node in-degrees of the neurons until a memory of a current computing core is full or all the neurons of the neuron group are assigned. When remaining neurons are still unassigned, the remaining neurons may be classified into a new neuron group and assigned in same steps as above. After all neurons are assigned, a corresponding relationship between the topological numbers of the neurons and the computing cores may be returned as a constructed initial solution of mapping. In this case, all the neurons in each computing core may reconstitute a new neuron group, and a new DAG with the neuron group as a node may be generated, which is called a physical DAG.

Step 4 includes defining and initializing a tabu search table and a timer, calculating cost functions of all computing cores, and selecting candidate computing cores according to the cost functions, to construct a candidate set. Specifically, the following substeps are included.

Step 4.1 may include assuming that after initial assignment of the neuron sequences, there are a total of $N$ neuron groups and a total of $G$ available assigned network-on-chip computing cores (including cores occupied by the $N$ neuron groups), and selecting $K$ neuron groups from the $N$ neuron groups, called the candidate set, to serve as operating objects of an optimization algorithm, where $K \leq N \leq G$, and all of $K$, $N$, and $G$ are positive integers.

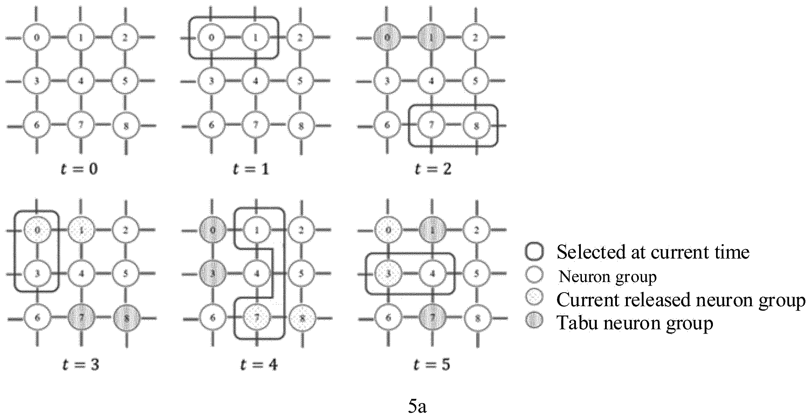

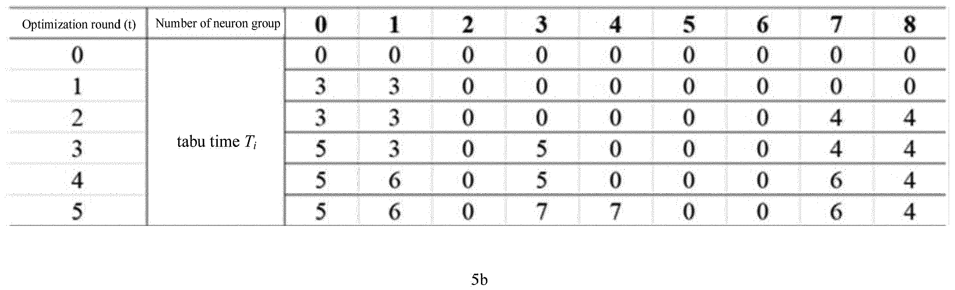

Step 4.2 may include initializing a one-dimensional tabu search table denoted as $T$ with a length of N with initial values of 0, and initializing a tabu time window constant denoted as $\tau$ with a typical value that is an integer within an interval [5,10] and a timer denoted as $t$ with an initial value of 0. For an $i$-th neuron group, $i \in N$, a tabu time denoted as $T[i]$ in the tabu search table is defined, which indicates that when a current time $t$, i.e., a current optimization round satisfies a relationship: $t < T[i]$, the neuron group may be not allowed to be selected into the candidate set, and only when the time $t$ satisfies a relationship: $t \geq T[i]$, the neuron group is selected into the candidate set. When the $i$-th neuron group is selected into the candidate set at the time $t$, the time of the neuron group in the tabu search table may be updated to $t + \tau$, referring to FIG. 5a and FIG. 5b. In this embodiment, the value of $\tau$ may be 2.

Step 4.3 may include calculating a cost function between the neuron groups in the physical DAG and a global cost function of the network-on-chip, and searching for the candidate set by using a selection method based on undirected graph breadth-first search algorithm or a selection method based on a global cost function and a Prim minimum spanning tree algorithm.

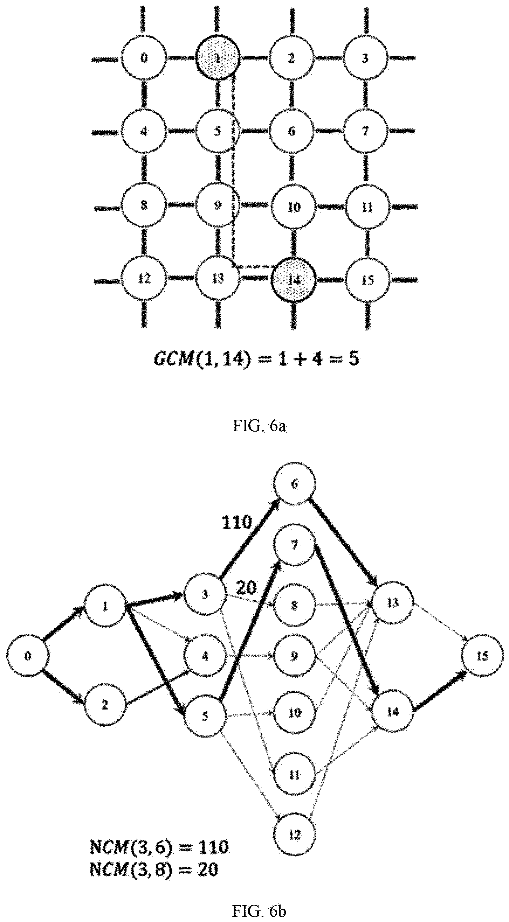

Specifically, referring to FIG. 6a, the computing cores of the network-on-chip may be numbered sequentially, and cost function values between each two computing cores in a two-dimensional grid may be recorded in a two-dimensional variable GCM, where $GCM(i,j)$ represents a cost function value between a computing core numbered $i$ and a computing core numbered $j$.

Referring to FIG. 6b, the computing cores of the network-on-chip may also be numbered sequentially, and cost function values of neural connections between each two neuron groups may be recorded in a two-dimensional variable NCM, where $NCM(i,j)$ represents a cost function value between a computing core numbered $i$ and a computing core numbered $j$.

An XY dimensional order routing algorithm may be used as a network-on-chip routing algorithm, and $GCM(i,j)$ may be approximated as a Manhattan distance between two cores, that is,

$$GCM(i,j) = |x_i - x_j| + |y_i - y_j|.$$

A method for calculating the cost function between the neuron groups may be to calculate communication density of spike packets between two neuron groups. $NCM(i_n, j_n)$ may be approximated as communication density between the neuron group $i_n$ and the neuron group $j_n$.

A method for calculating the communication density may be as follows: randomly selecting a sampled subset from an input dataset used by a neural network and inputting the data of the sampled subset to the neural network, and counting the number of spike packets sent from a neuron group $i_n$ to a neuron group $j_n$, and a count value of the number of spike packets being the corresponding communication density. It is to be noted that the neuron group herein is a concept in the physical DAG, and it is needed to query equivalent neuron groups in an original network DAG and perform counting.

A method for calculating the global cost function may be to calculate an overall cost of communication of spikes on the network-on-chip. It is assumed that numbers of the computing cores where the neuron group $i_n$ and the neuron group $j_n$ are located are $i_g$ and $j_g$, respectively, and the overall cost is a product of a communication distance and the communication density, that is,

$C(i_n, i_g, j_n, j_g) = GCM(i_g, j_g) \times NCM(i_n, j_n)$, where $GCM(i_g, j_g)$ represents a Manhattan distance between the computing cores $i_g$ and $j_g$.

Two methods for selecting a neuron group candidate set may be proposed to construct the candidate set.

The selection method based on undirected graph breadth-first search algorithm may further include: transforming the physical DAG into an undirected graph, randomly selecting a neuron group to build an initial candidate set, traversing, by using a breadth-first search algorithm, the undirected graph with the neuron group as a starting point, sequentially adding visited neuron groups not within a tabu range to the candidate set until there are $K$ neuron groups in the candidate set, and returning the candidate set.

The selection method based on the global cost function and the Prim minimum spanning tree algorithm may further include: transforming the physical DAG into an undirected graph, randomly selecting a neuron group to build an initial candidate set, calculating and sorting, in the undirected graph with the neuron group as an endpoint, global costs of all neuron groups connected thereto, selecting a neuron group with a maximum global cost to add the selected neuron group to the candidate set, investigating all edges accessible to all current neuron groups in the candidate set, searching for a neuron group of which the edges are not in the candidate set, has the maximum global cost, and is not within a range of the tabu search table, adding the searched neuron group to the candidate set again, repeating the search process until there are $K$ neuron groups in the candidate set, and returning the candidate set.

Step 5 includes establishing an integer programming model for a selected and constructed candidate set and calculating an optimal solution, and swapping a core position of each neuron group according to the optimal solution, to complete local search optimization.

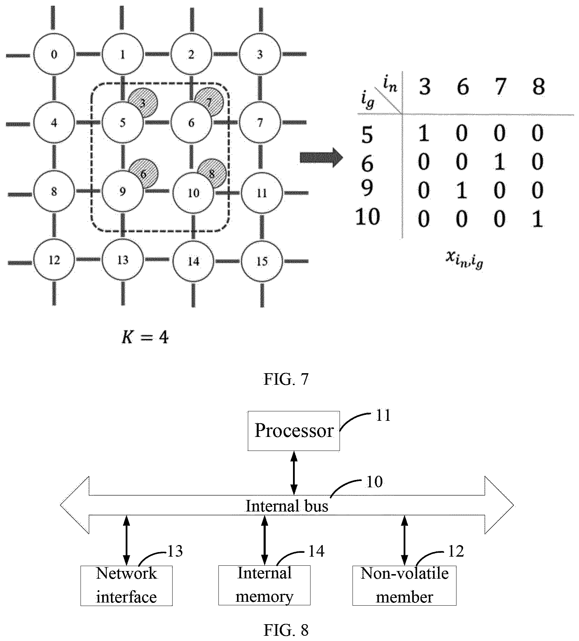

A constrained integer programming model may be established for the obtained $K$ neuron groups and the $K$ computing cores where the K neuron groups are currently located. Referring to FIG. 7, it is set that numbers of the computing cores where the neuron group $i_n$ and a neuron group $j_n$ are located are $i_g$ and $j_g$, respectively. It is set that a variable $x_{in,ig}$ of 0-1 is an existence state of the neuron group $i_n$ on the computing core $i_g$, when $x_{in,ig}$ is 1, it indicates that the neuron group $i_n$ is mapped on the computing core $i_g$, and when $x_{in,ig}$ is 0, it indicates that the neuron group $i_n$ is not mapped on the computer core $i_g$. The following integer programming model may be established:

*minimize*:

$$\sum_{i_n i_g, j_n, j_g \in K} x_{i_n, i_g}\, x_{j_n, j_g}\, C\big(i_n, i_g, j_n, j_g\big) + \sum_{i_n i_g \in K, j_n, j_g \in N \backslash K} x_{i_n, i_g}\, C\big(i_n, i_g, j_n, j_g\big)$$

*subject to*:

$$\sum_{i_n \in K} x_{i_n, i_g} = 1$$

*for all $i_g$ in $K$*

$$\sum_{i_g \in K} x_{i_n, i_g} = 1$$

*for all $i_n$ in $K$*

$$x_{i_n, i_g} \in \{0, 1\}$$

*for all $i_n$, $i_g$ in $K$*

an objective function includes two parts, $\Sigma_{i_n i_g, j_n, j_g \in K} x_{in,ig} x_{jn,j} C(i_n, i_g, j_n, j_g)$ is a total communication cost between the K neuron groups and the computing cores where the K neuron groups are located, and $\Sigma_{i_n i_g \in K, j_n, j_g \in N \backslash K} x_{in,ig} C(i_n, i_g, j_n, j_g)$ is a total communication cost between the $K$ neuron groups and other neuron groups not in the candidate set. Different from free variables corresponding to positions of the $K$ neuron groups that are allowed to be adjusted, and positions of the computing cores to which all other neuron groups not in the candidate set are mapped are fixed during the current optimization, so only $x_{in,ig}$ is retained; and

a constraint condition $\Sigma_{i_n \in K} x_{in,ig} = 1$ *for all $i_g$ in $K$* requires that, for each computing core, only one neuron group is deployed thereon. A constraint condition $\Sigma_{i_g \in K} x_{in,ig} = 1$ *for all $i_n$ in $K$* requires that each neuron group is deployed on only one computing core.

The integer programming model may be a typical mixed integer nonlinear programming model, and an optimal solution $x_{in,ig}$ of the integer programming model may be obtained by using a solving algorithm such as an extended cutting plane method. All neuron groups $i_n$, $i_g$ satisfying a relationship: $x_{in,ig} = 1$ may be found to obtain swapped positions of all the $K$ neuron groups, and a value of a cost function corresponding to a new neuron group position may be relatively smaller. A total cost function of all $N$ neuron groups of the neural network model may be decomposed into a sum of cost functions of candidate sets and non-candidate sets, positions of the non-candidate sets may not change, and the cost may remain unchanged. Therefore, the total cost function may be optimized and reduced due to a decrease in the cost of the neuron group in the candidate set.

Step 6 may include iterating the timer, checking and updating the tabu search table with the method at step 4.2, iteratively repeating step 4 to step 6 until an upper limit of iteration is reached, and finally outputting mapping results from the neuron groups to the computing cores, to complete the mapping.

The present invention has the following advantages. Through tabu search and local integer programming, the global cost function is optimized, which prevents local optimum of the search process. The method of the present invention provides a search strategy based on a nearest neighbor construction strategy and tabu search algorithm, which reduces overall power consumption and a total communication distance of a target machine after the neural network model is mapped, and greatly improves efficiency of transmission of data on the network-on-chip and an overall computing speed.

Corresponding to the foregoing embodiments of the neural network on-chip mapping method based on the tabu search algorithm, the present invention further provides embodiments of a neural network on-chip mapping apparatus 100 based on a tabu search algorithm.

Referring to FIG. 8, the neural network on-chip mapping apparatus 100 based on the tabu search algorithm provided in embodiments of the present invention includes one or more processors 11 configured to implement the neural network on-chip mapping method based on the tabu search algorithm in the above embodiments.

The embodiments of the neural network on-chip mapping apparatus 100 based on a tabu search algorithm in the present invention are applicable to any device with a data processing capability. The any device with the data processing capability may be a device or an apparatus such as a computer. The apparatus embodiments may be implemented by software, hardware, or a combination of hardware and software. Taking software implementation as an example, as a logical apparatus, the software is formed by reading a corresponding computer program instruction from a non-volatile member 12 to an internal memory 14 for running by a processor 11 in any device with a data processing capability. In terms of hardware, FIG. 8 is a diagram of a hardware structure of any device with a data processing capability where the neural network on-chip mapping apparatus 100 based on the tabu search algorithm is located according to the present invention. In addition to the processor 11, the internal memory 14, a network interface 13, an internal bus 10, and the non-volatile memory 12 shown in FIG. 8, the any device with the data processing capability where the apparatus is located in the embodiments may further include other hardware generally according to actual functions of the any device with the data processing capability. Details are not described again.

A detailed implementation process of a function and an effect of each unit in the above apparatus may be obtained with reference to the implementation process of a corresponding step in the above method. Details are not described herein again.

Since an apparatus embodiment basically corresponds to a method embodiment, for a related part, reference may be made to some descriptions in the method embodiment. The apparatus embodiments descried above are merely examples. The units described as separate parts may or may not be physically separate, and parts displayed as units may or may not be physical units, that is, may be located in one place, or may be distributed on a plurality of network units. Some or all of the modules may be selected based on an actual requirement to achieve the objectives of the solutions of the present invention. Those of ordinary skill in the art can understand and implement the present invention without creative efforts.

Embodiments of the present invention further provide a computer-readable storage medium, a program is stored on the computer-readable storage medium, and when the program is executed by the processor 11, the neural network on-chip mapping apparatus based on a tabu search algorithm 100 is implemented.

The computer-readable storage medium may be an internal storage unit of the any device with the data processing capability in the foregoing embodiment, for example, a hard disk or an internal memory. Alternatively, the computer-readable storage medium may be an external storage device of the device, for example, an equipped plug-in hard disk, a Smart Media Card (SMC), a Secure Digital (SD) card, or a flash card. Furthermore, the computer-readable storage medium may alternatively include both the internal storage unit of the any device with the data processing capability and the external storage device. The computer-readable storage medium is configured to store the computer program and other programs and data that are required by the any device with the data processing capability, and may be further configured to temporarily store data that has been outputted or is to be outputted.

The descriptions above are only preferred embodiments of the present invention, rather than limiting the present invention in any form. Although the implementation process of the present invention has been explained in detail in the preceding text, for those skilled in the art, the technical solutions recorded in the above embodiments can still be modified, or part of the technical features can be equivalently replaced. Any modification or equivalent replacement within the spirit and principle of the present invention will fall into the protection scope of the present invention.

**Claims**

1. A neural network on-chip mapping method based on a tabu search algorithm, **characterized by** comprising following steps:

   step 1, acquiring a topological structure and parameter information of a spiking neural network to be deployed and constraint information of computing cores of a target machine network-on-chip;
   step 2, converting the spiking neural network into a directed acyclic graph (DAG), and determining neuron sequences to be assigned according to topological sorting in the DAG;
   step 3, from a pre-specified initial computing core in the network-on-chip, sequentially assigning the neuron sequences in clusters, and mapping and placing, by using a nearest neighbor algorithm, the neuron sequences one by one on the computing cores of the network-on-chip to construct an initial solution of mapping;
   step 4, defining and initializing a tabu search table and a timer, calculating cost functions of all computing cores, and selecting candidate computing cores according to the cost functions, to construct a candidate set;
   step 5, establishing an integer programming model for a selected and constructed candidate set and calculating an optimal solution, and swapping a core position of each neuron group according to the optimal solution, to complete local search optimization; and
   step 6, iterating the timer, checking and updating the tabu search table, iteratively repeating step 4 to step 6 until an upper limit of iteration is reached, and finally outputting mapping results from the neuron groups to the computing cores, to complete the mapping.

2. The neural network on-chip mapping method based on the tabu search algorithm of claim 1, wherein, at step 1, the spiking neural network comprises synapses and connection structures with neuron groups as nodes, each of the neuron groups comprises a plurality of neurons, the topological structure is a graph data structure represented by nodes and edges or a network structure comprising size and shape information, and at the same time, the topological structure is configured to provide behavioral parameters of the neurons and connection parameters in synaptic connections; and
   each of the computing cores is a hardware unit comprising a memory and a computing unit, and the acquiring the constraint information of the computing cores of the target machine network-on-chip comprises: acquiring sizes of memories of the computing cores, two-dimensional spatial position coordinates on the network-on-chip, and a connection between the computing cores.

3. The neural network on-chip mapping method based on the tabu search algorithm of claim 2, wherein step 2 further comprises:

   converting a computing graph represented by neuron groups as nodes and synaptic connections as edges, and constructing a complete directed acyclic graph according to a model input node of the spiking neural network as a source, a model output node as a target, and directions of the synaptic connections as directed edges, which is called a network DAG;
   then determining an order of the neuron groups for the DAG by using a topological sorting method, wherein the topological sorting method comprises: counting all node in-degrees in the DAG and maintaining a priority queue sorted in ascending order of the node in-degrees, popping a node in the priority queue, sequentially deleting the edges in the DAG with this node as output, updating in-degrees of the remaining nodes in the priority queue, and repeating the steps until the priority queue is empty; and
   finally, marking an order in which nodes of the neuron group are popped from the priority queue as topological sorting corresponding to the nodes of the neuron group, wherein numbers of the topological sorting are topological numbers of all neurons in the neuron group.

4. The neural network on-chip mapping method based on the tabu search algorithm of claim 3, wherein step 3 further comprises: starting assignment from the pre-specified initial computing core according to acquired two-dimensional grid information of the network-on-chip, wherein, when not specified, the computing core at an upper left corner of a two-dimensional grid in the two-dimensional grid information is used as the initial computing core; and

sequentially assigning the neuron sequences in clusters to the computing nodes according to the topological numbers, counting a quantity of synaptic connections between a current neuron group and a neuron group assigned by the network-on-chip, sequentially trying to use all available unassigned computing core resources of the network-on-chip to calculate local cost functions, respectively, and selecting, by using the nearest neighbor algorithm, the computing core of the network-on-chip with a minimum cost as a target core next assigned; wherein, prior to assignment of all neurons in one neuron group, since all neurons have a same topological number, node in-degrees of all the neurons are counted, and assignment is performed sequentially in descending order of the node in-degrees of the neurons until a memory of a current computing core is full or all the neurons of the neuron group are assigned; when remaining neurons are still unassigned, the remaining neurons are classified into a new neuron group and assigned; and after all neurons are assigned, a corresponding relationship between the topological numbers of the neurons and the computing cores is returned as the constructed initial solution of mapping; and

at the same time, all the neurons in each computing core reconstitute a new neuron group, and a new DAG with the neuron group as a node is generated, which is called a physical DAG.

5. The neural network on-chip mapping method based on the tabu search algorithm of claim 4, wherein step 4 further comprises:

step 4.1, setting that a total of $N$ neuron groups are mapped and placed in step 3 and a total of $G$ available assigned network-on-chip computing cores, wherein $N \le G$, and both $N$ and $G$ are positive integers; step 4.2, initializing a one-dimensional tabu search table denoted as $T$ with a length of $N$, with initial values of 0, and initializing a tabu time window constant denoted as $\tau$ with a typical value that is an integer within an interval [5,10] and a timer denoted as $t$ with an initial value of 0; and

for an $i$-th neuron group, $i \in N$, defining a tabu time denoted as $T[i]$ in the tabu search table, which indicates that when a current time $t$, i.e., a current optimization round satisfies a relationship: $t < T[i]$, the neuron group is not allowed to be selected into the candidate set, and only when the time $t$ satisfies a relationship: $t \ge T[i]$, the neuron group is selected into the candidate set, and when the $i$-th neuron group is selected into the candidate set at the moment $t$, the time of the neuron group in the tabu search table is updated to $t + \tau$; and

step 4.3, calculating a cost function between the neuron groups in the physical DAG and a global cost function of the network-on-chip, and searching for the candidate set by using a selection method based on undirected graph breadth-first search algorithm or a selection method based on a global cost function and a Prim minimum spanning tree algorithm.

6. The neural network on-chip mapping method based on the tabu search algorithm of claim 5, wherein at step 4.3,

the calculating the cost function between the neuron groups in the physical DAG is calculating communication density of spike packets between two neuron groups, which further comprises: randomly selecting a sampled subset from an input dataset used by a neural network and inputting the data of the sampled subset to the neural network, and counting the number of spike packets sent from a neuron group $i_n$ to a neuron group $j_n$, wherein a count value of the number of spike packets is the corresponding communication density, and $NCM(i_n,j_n)$ represents communication density between the neuron group $i_n$ and the neuron group $j_n$;

the calculating the global cost function of the network-on-chip is calculating an overall cost of communication of spikes on the network-on-chip, which further comprises: assuming that numbers of the computing cores where the neuron group $i_n$ and the neuron group $j_n$ are located are $i_g$ and $j_g$, respectively, wherein the overall cost is a product of a communication distance and communication density, that is,

$C(i_n,i_g,j_n,j_g) = GCM(i_g,j_g) \times NCM(i_n,j_n)$, where $GCM(i_g,j_g)$ represents a Manhattan distance between the computing core $i_g$ and the computing core $j_g$;

the selection method based on undirected graph breadth-first search algorithm further comprises: transforming the physical DAG into an undirected graph, randomly selecting a neuron group to build an initial candidate set, traversing, by using a breadth-first search algorithm, the undirected graph with the neuron group as a starting point, and sequentially adding visited neuron groups not within a tabu range to the candidate set until a required number of neuron groups is reached in the candidate set; and

the selection method based on the global cost function and the Prim minimum spanning tree algorithm further comprises: transforming the physical DAG into an undirected graph, randomly selecting a neuron group to build an initial candidate set, calculating and sorting, in the undirected graph with the neuron group as an endpoint, global costs of all neuron groups connected thereto, selecting a neuron group with a maximum global cost and adding the selected neuron group to the candidate set, investigating all edges accessible to all current neuron groups in the candidate set, searching for a neuron group of which the edges are not in the candidate set, has the maximum global cost, and is not within a range of the tabu search table, adding the searched neuron group to the candidate set again, and repeating the search process until a required number of neuron groups is reached in the candidate set.

7. The neural network on-chip mapping method based on the tabu search algorithm of claim 6, wherein the establishing the integer programming model at step 5 further comprises:

setting that the candidate set comprises $K$ neuron groups, wherein numbers of the computing cores where a neuron group $i_n$ and a neuron group $j_n$ are located are $i_g$ and $j_g$, respectively; setting that a variable $x_{in,ig}$ of 0-1 is an existence state of the neuron group $i_n$ on the computing core $i_g$, when $x_{in,ig}$ is 1, it indicates that the neuron group $i_n$ is mapped on the computing core $i_g$, and when $x_{in,ig}$ is 0, it indicates that the neuron group $i_n$ is not mapped on the computing core $i_g$; and establishing the integer programming model, wherein an expression of the integer programming model is:

minimize:

$$\sum_{i_n i_g, j_n, j_g \in K} x_{i_n, i_g}\, x_{j_n, j_g}\, C\big(i_n, i_g, j_n, j_g\big) + \sum_{i_n i_g \in K, j_n, j_g \in N \backslash K} x_{i_n, i_g}\, C\big(i_n, i_g, j_n, j_g\big)$$

*subject to*:

$$\sum_{i_n \in K} x_{i_n, i_g} = 1$$

*for all $i_g$ in **K***

$$\sum_{i_g \in K} x_{i_n, i_g} = 1$$

*for all $i_n$ in **K***

$$x_{i_n, i_g} \in \{0, 1\}$$

*for all $i_n$, $i_g$ in **K***

wherein an objective function comprises two parts, $\Sigma_{inig,jn,jg \in K} x_{in,ig} x_{jn,jg} C(i_n, i_g, j_n, j_g)$ is a total communication cost between the $K$ neuron groups and the computing cores where the $K$ neuron groups are located, $\Sigma_{inig \in K, jn, jg \in N\backslash K} x_{in,ig} C(i_n, i_g, j_n, j_g)$ is a total communication cost between the $K$ neuron groups and other neuron groups not in the candidate set, and positions of the computing cores to which the neuron groups not in the candidate set are mapped are all fixed, so only $x_{in,ig}$ is retained; and
wherein a constraint condition $\Sigma_{in \in K} x_{in,ig} = 1$ *for all $i_g$ in **K*** requires that, for each computing core, only one neuron group is deployed thereon; and a constraint condition $\Sigma_{ig \in K} x_{in,ig} = 1$ *for all $i_n$ in **K*** requires that each neuron group is deployed on only one computing core.

8. The neural network on-chip mapping method based on the tabu search algorithm of claim 7, wherein the integer programming model is a mixed integer nonlinear programming model, an optimal solution $x_{in,ig}$ is obtained by using an extended cutting plane method, and the neuron groups $i_n$, $i_g$ satisfying a relationship: $x_{in,ig} = 1$ are found to obtain swapped positions of the computer cores of all $K$ neuron groups.

9. A neural network on-chip mapping apparatus based on a tabu search algorithm, **characterized by** comprising one or more processors configured to implement the neural network on-chip mapping method based on the tabu search algorithm of any one of claims 1 to 8.

**10.** A computer-readable storage medium, **characterized in that** a program is stored on the computer-readable storage medium, and when the program is executed by a processor, the neural network on-chip mapping method based on the tabu search algorithm of any one of claims 1 to 8 is implemented.

step 1: acquiring a topological structure and parameter information of a spiking neural network to be deployed and constraint information of computing cores of a target machine network-on-chip

step 2: converting the spiking neural network into a directed acyclic graph (DAG), and determining neuron sequences to be assigned according to topological sorting in the DAG

step 3: from a pre-specified initial computing core in the network-on-chip, sequentially assigning the neuron sequences in clusters, and mapping and placing, by using a nearest neighbor algorithm, the neuron sequences one by one on the computing cores of the network-on-chip to construct an initial solution of mapping

step 4: defining and initializing a tabu search table and a timer, calculating cost functions of all computing cores, and selecting candidate computing cores according to the cost functions, to construct a candidate set

step 5: establishing an integer programming model for a selected and constructed candidate set and calculating an optimal solution, and swapping a core position of each neuron group according to the optimal solution, to complete local search optimization

step 6: iterating the timer, checking and updating the tabu search table, iteratively repeating step 4 to step 6 until an upper limit of iteration is reached, and finally outputting mapping results from the neuron groups to the computing cores, to complete the mapping

FIG. 1

FIG. 2

FIG. 3

assigned neuron group
current neuron group to be assigned

FIG. 4

t = 0    t = 1    t = 2

t = 3    t = 4    t = 5

○ Selected at current time
○ Neuron group
○ Current released neuron group
● Tabu neuron group

5a

| Optimization round (t) | Number of neuron group | 0 | 1 | 2 | 3 | 4 | 5 | 6 | 7 | 8 |
|---|---|---|---|---|---|---|---|---|---|---|
| 0 | | 0 | 0 | 0 | 0 | 0 | 0 | 0 | 0 | 0 |
| 1 | | 3 | 3 | 0 | 0 | 0 | 0 | 0 | 0 | 0 |
| 2 | tabu time $T_i$ | 3 | 3 | 0 | 0 | 0 | 0 | 0 | 4 | 4 |
| 3 | | 5 | 3 | 0 | 5 | 0 | 0 | 0 | 4 | 4 |
| 4 | | 5 | 6 | 0 | 5 | 0 | 0 | 0 | 6 | 4 |
| 5 | | 5 | 6 | 0 | 7 | 7 | 0 | 0 | 6 | 4 |

5b

$$GCM(1, 14) = 1 + 4 = 5$$

FIG. 6a

$$NCM(3, 6) = 110$$
$$NCM(3, 8) = 20$$

FIG. 6b

$K = 4$

FIG. 7

FIG. 8

## INTERNATIONAL SEARCH REPORT

| International application No. |
|---|
| **PCT/CN2023/110115** |

**A.  CLASSIFICATION OF SUBJECT MATTER**

G06F15/173(2006.01)i;  G06N3/04(2023.01)i

According to International Patent Classification (IPC) or to both national classification and IPC

**B.  FIELDS SEARCHED**

Minimum documentation searched (classification system followed by classification symbols)

IPC:G06F,G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 之江, 浙江大学, 何煜坤, 马德, 李莹, 孙世春, 章明, 片上, 映射, 脉冲神经网络, 禁忌搜索, 计算核心, 有向无环图, 计时器, 整数规划模型, ZHEJIANG LAB, HE Yukun, MA De, LI Ying, SUN Shichun, ZHANG Ming, network on chip, Noc, mapping, spiking neural network, tabu search, core, IP, DAG, directed acyclic graph

**C.  DOCUMENTS CONSIDERED TO BE RELEVANT**

| Category* | Citation of document, with indication, where appropriate, of the relevant passages | Relevant to claim No. |
|---|---|---|
| PX | CN 115168281 A (ZHEJIANG LAB et al.) 11 October 2022 (2022-10-11)<br>claims 1-10 | 1-10 |
| Y | CN 114492782 A (ZHEJIANG LAB et al.) 13 May 2022 (2022-05-13)<br>description, paragraphs [0027]-[0055], and claims 1-10 | 1-3 |
| Y | 岳培培 等 (YUE, Peipei et al.). "NoC映射问题中的列举路径分配算法 (Enumeration-Based Path Allocation Algorithm in NoC Mapping)"<br>电子科技大学学报 (Journal of University of Electronic Science and Technology of China),<br>31 January 2008 (2008-01-31),<br>pages 54-57 | 1-3 |
| Y | 常政威 等 (CHANG, Zhengwei et al.). "片上网络映射问题的改进禁忌搜索算法 (An Improved Tabu Search Algorithm for Network-on-Chip Mapping)"<br>计算机辅助设计与图形学学报 (Journal of Computer-Aided Design & Computer Graphics),<br>29 February 2008 (2008-02-29),<br>pages 155-160 | 1-3 |

☑ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2023** | **08 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| International application No. |
| --- |
| **PCT/CN2023/110115** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 109726479 A (NANJING NINGQI INTELLIGENT COMPUTING CHIP INSTITUTE CO., LTD.) 07 May 2019 (2019-05-07)<br>entire document | 1-10 |
| A | CN 114492770 A (ZHEJIANG UNIVERSITY et al.) 13 May 2022 (2022-05-13)<br>entire document | 1-10 |
| A | US 2016335568 A1 (COX AUTOMOTIVE, INC.) 17 November 2016 (2016-11-17)<br>entire document | 1-10 |
| A | US 2022207758 A1 (YANG, T.) 30 June 2022 (2022-06-30)<br>entire document | 1-10 |

Form PCT/ISA/210 (second sheet) (July 2022)

International application No.

**PCT/CN2023/110115**

| Patent document cited in search report | | | Publication date (day/month/year) | Patent family member(s) | | | Publication date (day/month/year) |
|---|---|---|---|---|---|---|---|
| CN | 115168281 | A | 11 October 2022 | None | | | |
| CN | 114492782 | A | 13 May 2022 | None | | | |
| CN | 109726479 | A | 07 May 2019 | None | | | |
| CN | 114492770 | A | 13 May 2022 | None | | | |
| US | 2016335568 | A1 | 17 November 2016 | CA | 2985643 | A1 | 24 November 2016 |
| | | | | US | 2019295009 | A1 | 26 September 2019 |
| | | | | US | 11416787 | B2 | 16 August 2022 |
| | | | | EP | 3295301 | A1 | 21 March 2018 |
| | | | | EP | 3295301 | A4 | 31 October 2018 |
| | | | | WO | 2016187043 | A1 | 24 November 2016 |
| | | | | AU | 2016265691 | A1 | 21 December 2017 |
| US | 2022207758 | A1 | 30 June 2022 | US | 11721085 | B2 | 08 August 2023 |

Form PCT/ISA/210 (patent family annex) (July 2022)

**EP 4 375 844 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211098597